# EUROPEAN PATENT APPLICATION

(11) **EP 4 645 006 A1**
(43) Date of publication of application: **05.11.2025**
(21) Application number: 23910195.9
(22) Date of filing: 14.12.2023
(51) Int. Cl.: G05B 19/042

(54) **SAFETY CONTROL METHOD, SAFETY CONTROL CIRCUIT AND SAFETY CONTROL SYSTEM FOR ROBOT**

(30) Priority: 28.12.2022 CN 202211693629
(71) Applicant: Guangdong Midea Electric Co., Ltd., Foshan, Guangdong 528311 (CN); KUKA Robotics Guangdong Co., Ltd., Foshan, Guangdong 528311 (CN); Kuka Robotics Manufacturing China Co., Ltd., Xiaokunshan Town Shanghai 201616 (CN); Midea Group Co., Ltd., Foshan, Guangdong 528311 (CN)
(72) Inventor: DING, Chengrun, Foshan, Guangdong 528311 (CN); LI, Lerong, Foshan, Guangdong 528311 (CN); WEN, Yuanming, Foshan, Guangdong 528311 (CN); LIU, Dan, Foshan, Guangdong 528311 (CN); TANG, Jian, Foshan, Guangdong 528311 (CN)
(74) Representative: Oelke, Jochen
(86) International application number: PCT/CN2023/138919
(87) International publication number: WO 2024/140265

(57) **Abstract**

The present application relates to the field of safety control and discloses a safety control method, a safety control circuit, and a safety control system for a robot. The safety control circuit includes a plurality of input interface circuits, and the plurality of input interface circuits may be connected to a plurality of safety input devices in one-to-one correspondence. The safety control method includes: determining first type information of each of the plurality of safety input device connected to a corresponding one of the plurality of input interface circuits; generating a test signal based on the first type information; transmitting the test signal to the corresponding one of the plurality of input interface circuits and receiving, from the corresponding one of the plurality of input interface circuits, a feedback signal of the each safety input device connected to the corresponding one of the plurality of input interface circuits to the test signal; determining whether the each safety input device is abnormal based on the feedback signal; and controlling the robot to execute a safety strategy in response to abnormality. In the present application, corresponding test signals are output according to the first type information of the safety input devices connected to different input interface circuits, there is no need to dispose additional dedicated safety relay as the intermediate transition, which may effectively reduce costs and flexibly configure the quantity and types of the connected safety input devices.

## Description

### TECHNICAL FIELD

The present disclosure relates to the field of safety control robots, and in particular to a safety control method, a safety control circuit, and a safety control system for a robot.

### BACKGROUND

With the advancement of industrial automation, the use of industrial robots is increasing. While improving operating efficiency, the safety function technology of the industrial robots has become a top priority in research and development design. It is usually required to meet the safety architecture proposed by collaborative robot safety standards. Specifically, control cabinets of existing industrial robots are typically equipped with safety input and output interfaces for accessing safety peripherals, which are generally fixed interfaces suitable for double-way switch signals and compatible with safety relay outputs on the market.

When the safety peripheral is a pressure sensor or electronic safety signal, a dedicated safety PLC (safety relay) must be added as an intermediate transition to convert the signal into a mechanical switch for processing, which is expensive. At the same time, when the types and quantity of accessed safety peripherals are fixed, that is, the type of safety input signal interface is fixed, users may only connect the fixed interface to the safety peripherals according to the preset access signal. It is difficult to flexibly configure and use different types and quantity of safety peripherals, and cannot cope with flexible practical application requirements.

### SUMMARY OF THE DISCLOSURE

The present disclosure at least provides a safety control method, a safety control circuit, and a safety control system for a robot, so as to reduce costs and achieve flexible configuration of the types and quantity of connected safety input devices.

A first aspect of the present disclosure provides a safety control method for a robot. A safety control circuit has a plurality of input interface circuits, and the plurality of input interface circuits are connected to a plurality of safety input devices in one-to-one correspondence. The safety control method includes:
determining first type information of each of the plurality of safety input devices connected to a corresponding one of the plurality of input interface circuits;
generating a test signal based on the first type information;
transmitting the test signal to the corresponding one of the plurality of input interface circuits and receiving, from the corresponding one of the plurality of input interface circuits, a feedback signal of the each safety input device connected to the corresponding one of the plurality of input interface circuits to the test signal;
determining whether the each safety input device connected to the corresponding one of the plurality of input interface circuits is abnormal based on the feedback signal; and
controlling the robot to execute a safety strategy in response to abnormality.

A second aspect of the present disclosure provides a safety control circuit for a robot, configured to implement the above safety control method. The safety control circuit includes:
a plurality of input interface circuits configured to be connected to the plurality of safety input devices for the robot in one-to-one correspondence; and
a processing circuit connected to the plurality of input interface circuits, wherein the processing circuit is configured to determine type information of each of the plurality of safety input devices connected to the corresponding one of the plurality of input interface circuits, and generate the test signal and determine the logic control strategy based on the first type information; the processing circuit is further configured to transmit the test signal to the corresponding one of the plurality of input interface circuits and receive the feedback signal of the each safety input device to the test signal from the corresponding one of the plurality of input interface circuits; and the processing circuit is further configured to determine whether the each safety input device is abnormal based on the feedback signal, and control the robot to execute the safety strategy based on the logic control strategy in response to the abnormality.

A third aspect of the present disclosure provides a safety control system for a robot including:
a safe input device configured to collect a danger triggering signal;
a servo control circuit connected to a robot and configured to control the robot;
a main control circuit connected to the servo control circuit and configured to control the servo control circuit; and
a safety control circuit respectively connected to the plurality of safety input devices and the servo control circuit, each of the plurality of safety control circuits is configured to generate an abnormal signal based on the danger triggering signal, and the servo control circuit is configured to execute corresponding safety sub-strategy based on the abnormal signal; and the safety strategy includes a plurality of safety sub-strategies;
wherein the safety control circuit is the above safety control circuit.

In the present disclosure, the plurality of input interface circuits are disposed, and the first type information of the safety input device connected to the plurality of input interface circuits is determined, so that different test signals are generated based on the first type information. Thus, the safety input device connected to different input interface circuits may generate corresponding feedback signals based on the different test signals, and determine whether the connected safety input device is abnormal based on the feedback signal. In response to abnormality, the robot is controlled to execute the safety strategy and achieve safety control for the robot. The plurality of input interface circuits of the present disclosure have the same circuit design. Different test signals are output through obtaining the first type information of the safety input device, there is no need to dispose additional dedicated safety relay as the intermediate transition, which may effectively reduce costs. In addition, in the present disclosure, corresponding testing may be performed by outputting the test signals corresponding to the first type information of the safety input devices. That is, the quantity and types of the safety input devices may be flexibly configured, thereby improving applicability.

It should be understood that the above general description and the subsequent detailed description are only illustrative and explanatory, and not limiting the present disclosure.

### BRIEF DESCRIPTION OF THE DRAWINGS

The accompanying drawings here are incorporated into the specification and form a part of the specification. These drawings illustrate embodiments consistent with the present disclosure, and are configured together with the specification to illustrate the technical solution of the present disclosure.
FIG. 1 is a schematic flowchart illustrating a safety control method for a robot in some embodiments of the present disclosure.
FIG. 2 is a structural schematic view of the safety control method for the robot in some embodiments of the present disclosure.
FIG. 3 is a structural schematic view of a safety control circuit for the robot in some embodiments of the present disclosure.
FIG. 4 is a structural schematic view of an input interface circuit of FIG. 3 in some embodiments of the present disclosure.
FIG. 5 is a structural schematic view of the input interface circuit of FIG. 3 in some embodiments of the present disclosure.
FIG. 6 is a structural schematic view of the safety control circuit for the robot in some embodiments of the present disclosure.
FIG. 7 is a structural schematic view of a safety control system for the robot in some embodiments of the present disclosure.

### DETAILED DESCRIPTION

The technical solutions in some embodiments of the present disclosure may be clearly and completely described in conjunction with accompanying drawings in some embodiments of the present disclosure. It should be understood that the specific embodiments described herein are only for explaining the present disclosure and are not intended to limit the present disclosure. Furthermore, it should be noted that for facilitate the description, the accompanying drawings only show some parts related to the present disclosure rather than the entire structure. Based on the embodiments in the present disclosure, all other embodiments obtained by those of ordinary skill in the art without creative effort are within the scope of the present disclosure.

In addition, the terms "first" or "second" that refer to numbers or ordinal numbers in the present disclosure are only configured to describe purposes and cannot be understood as indicating or implying relative importance or implicit indicating the quantity of technical features indicated. Therefore, features limited to "first" and "second" may explicitly or implicitly include at least one of these features. In the description of the present disclosure, "multiple" or "a plurality of" means at least two, such as two, three, or more, unless otherwise expressly and qualified.

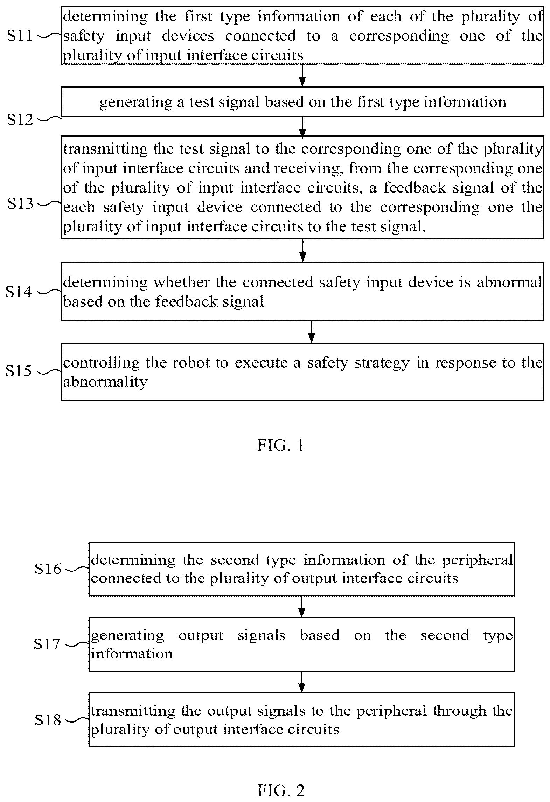

The present disclosure provides a safety control method for a robot, which may flexibly configure the quantity and types of safety input devices connected to the robot, so as to achieve safety control of different types and strategies for the robot. As illustrated in FIG. 1, FIG. 1 is a schematic flowchart illustrating a safety control method for a robot in some embodiments of the present disclosure. An executing entity of the safety control method for the robot in the present disclosure may be a safety control circuit.

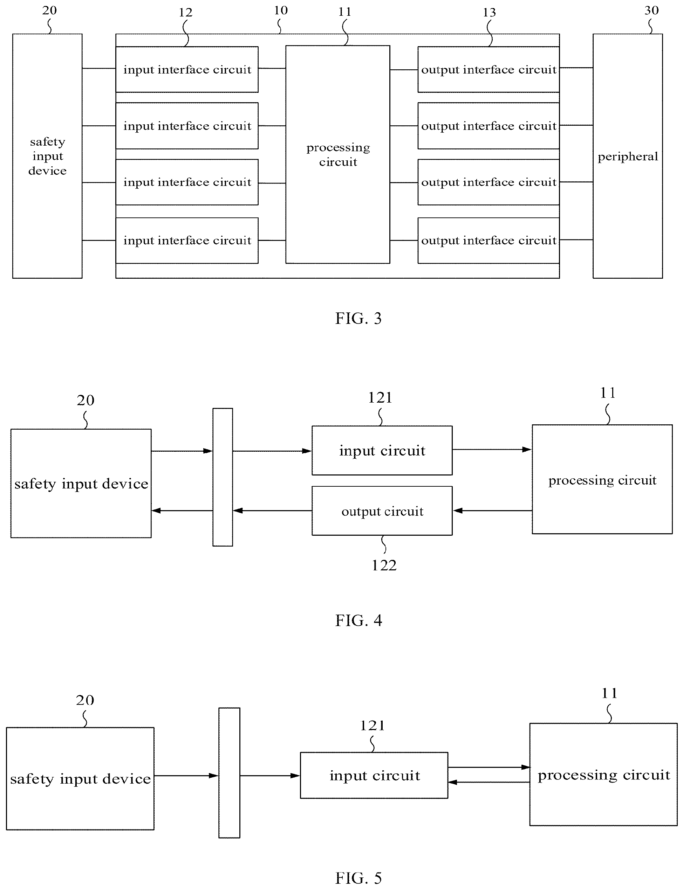

A structure of the safety control circuit may be shown in FIG. 3. FIG. 3 is a structural schematic view of a safety control circuit for the robot in some embodiments of the present disclosure. As illustrated in FIG. 3, the safety control circuit 10 includes a plurality of input interface circuits 12, a processing circuit 11, and a plurality of output interface circuits 13.

In some embodiments, the plurality of input interface circuits 12 are configured to connect a plurality of safety input devices 20 for the robot, so as to receive corresponding safety signals input by different safety input devices 20. Different input interface circuits 12 may be connected to the same or different safety input devices 20. That is, the safety signals received by the plurality of input interface circuits 12 may be the same or different. In some embodiments, the plurality of input interface circuits 12 may be connected to a plurality of identical safety input devices 20 to achieve redundant settings, preventing that the robot cannot execute corresponding safety strategies and cannot ensure it meets safety standards and requirements in case where only one safety input device 20 of the same type is disposed and damaged and the corresponding safety signals cannot be input. In some embodiments, the plurality of input interface circuits 12 may be connected to a plurality of different safety input devices 20 to achieve various types of safety strategy control. The safety strategy described in the present embodiment includes a plurality of safety sub-strategies, such as emergency stop, stop enabling, or resetting, etc., so as to improve a safety level for the robot and fully meet functional safety standards of industrial robots. The functional safety standards of industrial robots include, but are not limited to, safety requirements proposed by the collaborative robot safety standard ISO 10218 and a safety architecture proposed by the mechanical safety standard ISO 13849-1.

The processing circuit 11 is connected to the plurality of input interface circuits 12, so as to control the robot to execute corresponding safety strategy according to different safety signals input by the plurality of input interface circuits 12 which are different from each other, thereby achieving safety control. The plurality of output interface circuits 13 are connected to the processing circuit 11 and a peripheral 30. An input end of each of the plurality of output interface circuits 13 is connected to the processing circuit 11, and an output end of each of the plurality of output interface circuits 13 is connected to the peripheral 30. The plurality of output interface circuits 13 may output different types of output signals, i.e., the output signals have different signal frequencies or waveforms. The processing circuit 11 may obtain the type of the peripheral 30 connected to the plurality of output interface circuits 13 through the plurality of output interface circuits 13, determine the type of signals received by the peripheral 30 according to or based on the type of the peripheral 30, and control or enable the plurality of output interface circuits 13 to output the output signals of the corresponding signal types to the peripheral 30. In some embodiments, the safety input devices 20 may include an emergency stop switch, a safety door, an enabling switch, or a reset button, etc. The peripheral 30 may include a prompt light or other instrument device switch, etc.

The processing circuit 11 is configured to determine first type information of the safety input devices 20 connected to the plurality of input interface circuits 12, and generate test signals and determine a logic control strategy based on the first type information.

The first type information may be the categories or types of the safety input devices 20, which may be distinguished according to operating modes of the safety input devices 20. In some embodiments, for a mechanical device, it is necessary to determine whether a physical switch is closed or open; for a pressure device, it is necessary to determine whether a received external force value reaches the threshold; and for an optical and electronic device, it is necessary to determine whether a corresponding detection laser is received. Thus, due to different operating modes of different safety input devices 20, different test signals need to be received in order to achieve feedback of the test signals. That is, the first type information of the safety input devices 20 determine the types of the test signals that processing circuit 11 needs to output.

The processing circuit 11 is further configured to transmit the test signals to the plurality of input interface circuits 12, and receive feedback signals of the connected safety input devices 20 to the test signals from the plurality of input interface circuits 12. The connected safety input device 20 refers to the safety input device 20 connected to the corresponding one of the plurality of input interface circuits 12.

The plurality of input interface circuits 12 do not change the test signals generated by the processing circuit 11, also do not change the feedback signals generated by the safety input devices 20.

The processing circuit 11 is further configured to determine whether the connected safety input devices 20 are abnormal based on the feedback signals, and control the robot to execute the safety strategy based on the logic control strategy in response to the abnormality.

The feedbacks of the safety input devices 20 to the test signals are different, which also reflects the corresponding test results. In this case, the processing circuit 11 needs to determine the corresponding logic control strategies to be executed based on different test results, and implement corresponding logic control to achieve safety control. In some embodiments, in response to the feedback signals being different from a signal state in a normal state stored in the processing circuit 11, it is determined that the connected safety input device 20 is abnormal. An abnormal state may include different types of damages to the safety input devices 20, making the safety input devices 20 unable to generate correct feedback to the test signals. Thus, the processing circuit 11 may further determine abnormal types of the feedback signals to determine the abnormal types of the safe input devices 20. For example, whether a short circuit to ground or the short circuit to a high level has occurred.

The processing circuit 11 is further configured to determine second type information of the peripheral 30 connected to the plurality of output interface circuits 13, generate output signals based on the second type information, and transmit the output signals to the peripheral 30 through the plurality of output interface circuits 13.

The second type information may be the category or type of the peripheral 30, which may be distinguished according to an operating mode of the peripheral 30. In some embodiments, in a case where the peripheral 30 is a power prompt light that needs to remain on for a long time, it is necessary to receive an output signal with a stable voltage value. In a case where the peripheral 30 is an operating-state indicator light, in response to determining that the robot is in an abnormal-operating state, it is necessary to alternately flash to remind an operator to receive periodic pulse signals. Thus, when the processing circuit 11 determines the type of the corresponding connected peripheral 30 through the plurality of output interface circuits 13, it may output the required output signal type.

In some embodiments, the safety control method for the robot may include an operation S11, an operation S12, an operation S13, an operation S14, and an operation S15.

At the operation S11, the safety control method for the robot may include determining the first type information of each of the plurality of safety input devices connected to a corresponding one of the plurality of input interface circuits.

In some embodiments, the processing circuit 11 may be configured to determine the first type information of the safety input devices 20 connected to the plurality of input interface circuits 12. That is, the processing circuit 11 may be configured to determine the operating categories of the safety input devices 20 to determine the corresponding test signals to be generated. In some embodiments, a database for the robot may store a variety of different safety input devices 20, the safety input devices 20 may have different categories and different signals. The processing circuit 11 may read the first type information corresponding to a selection signal in the database through obtaining the selection signal that is generated based on interaction between the user and an interactive interface for the robot.

At the operation S12, the safety control method for the robot may include generating a test signal based on the first type information.

In some embodiments, the processing circuit 11 generates corresponding test signals based on the first type information determined in the operation S11. In some embodiments, the processing circuit 11 may select the corresponding type of the output test signal according to the first type information of the safety input devices 20 determined in the operation S11 through a software configuration mode. In some embodiments, the processing circuit 11 may also select and control different switch tubes to conduct and output corresponding test signals according to the first type information of the safety input devices 20 determined in the operation S11 through a hardware configuration mode.

At the operation S13, the safety control method for the robot may include transmitting the test signal to the corresponding one of the plurality of input interface circuits and receiving, from the corresponding one of the plurality of input interface circuits, a feedback signal of the each safety input device connected to the corresponding one the plurality of input interface circuits to the test signal.

In some embodiments, the processing circuit 11 outputs the test signals generated in the operation S12 to the plurality of input interface circuits 12 connected to the safety input devices 20, and transmits the test signals to the safety input devices 20 through the plurality of input interface circuits 12. The safety input devices 20 generate the feedback signals based on the test signals and transmit the feedback signals to the processing circuit 11 through the plurality of input interface circuits 12.

In some embodiments, in response to determining that the first type information of the safety input devices 20 connected to the plurality of input interface circuits 12 includes at least mechanical and/or pressure sensor types, an interface of each of the plurality of input interface circuits 12 may be shown in FIG. 4.

A mechanical safety input device 20 usually has two safety output signals and is characterized by including a mechanical switch, such as a pin type switch, a safety rope switch, an emergency stopping button, a hinged interlocking switch, a safety enabling switch, a safety limiting switch, or a safety carpet, etc. The mechanical switch may further include a button switch, and the button switch includes a self-locking button switch or an unlocked button switch. An operating principle of the self-locking button switch is that the self-locking button switch is closed after pressing, and a mechanical device inside the button hooks a contact point. After releasing, the self-locking button switch is still in a closed state. When the self-locking button switch is pressed again, the mechanical device inside the button disengages, and the self-locking button switch is disconnected after releasing. An operating principle of the unlocked button switch is that the unlocked button is turned on after being pressed, and the unlocked button is turned off after being released. The unlocked button switch cooperates with a relay or an electronic circuit to achieve circuit self-locking.

The types and forms of the mechanical switches are not exactly the same. There are mainly two types as follows.

The first type is a double-way normally closed/normally open switch. The characteristic is that the output includes a double-way switch. Under normal circumstances, the switch is closed or disconnected. Under abnormal conditions, a state of the double-way switch is converted. For example, the emergency stopping button is in the normally closed state, and the double switch is disconnected in response to pressing the emergency stopping button. The safety enabling switch is in the normally open state, and the double switch is closed in response to pressing the safety enabling switch.

The second type is that there is a switch between double-way outputs, such as the pressure sensor. In response to no one or heavy object applying a pressure to the pressure sensor, that is, in response to a load of the pressure sensor not exceeding a limit value, the switch is disconnected. In response to someone or a heavy object being on the safety carpet and applying a pressure to the pressure sensor, that is, in response to the load of the pressure sensor exceeding the limit value, the switch is closed.

In some embodiments, as illustrated in FIG. 4 and FIG. 3, FIG. 4 is a structural schematic view of an input interface circuit of FIG. 3 in some embodiments of the present disclosure. As illustrated in FIG. 4, each of the plurality of input interface circuits 12 includes an input circuit 121 and an output circuit 122. The input circuit 121 is respectively connected to the processing circuit 11 and the corresponding safety input device 20, and the signals flow from the corresponding safety input device 20 to the input circuit 121, and then to the processing circuit 11. The output circuit 122 is respectively connected to the processing circuit 11 and the corresponding safety input device 20, and the signals flow from the processing circuit 11 to the output circuit 122, and then to the corresponding safety input device 20. In some embodiments, each of the plurality of input interface circuits 12 is equipped with an interface board, which is a block shown in FIG. 4. The block is between the corresponding safety input device 20 and the input circuit 121, and between the corresponding safety input device 20 and the output circuit 122. Interface terminals of the input circuit 121 and the output circuit 122 are integrated into the interface board. In response to the safety input device 20 being connected to the plurality of input interface circuits 12, the interface terminals of the corresponding safety input device 20 are connected to the interface terminals of the input circuit 121 and the output circuit 122.

The output circuit 122 is configured to transmit the test signal to the corresponding connected safety input device 20. In some embodiments, the output circuit 122 is configured to transmit the test signal to the safety input device 20 connected to a corresponding one of the plurality of input interface circuits 12 where the output circuit 122 is located. The input circuit 121 is configured to receive the feedback signal to the test signal from the connected safety input device 20. In some embodiments, the input circuit 121 is configured to receive the feedback signal to the test signal from the safety input device 20 connected to the corresponding one of the plurality of input interface circuits 12 where the input circuit 121 is located.

The plurality of input interface circuits 12 are disposed in the safety control circuit 10. That is, a plurality of input circuits 121 and a plurality of output circuits 122 are disposed in the safety control circuit 10. Thus, the processing circuit 11 may simultaneously output corresponding test signals to different safety input devices 20 through the plurality of output circuits 122, and simultaneously receive corresponding feedback signals from different safety input devices 20 through the plurality of input circuits 121. In some embodiments, the processing circuit 11 may further output a plurality of test signals at different times. At this case, there may be the output circuit 122 outputting the test signals to the corresponding safety input device 20, and the input circuit 121 receiving the feedback signals from another safety input device 20.

In some embodiments, due to a conventional operating voltage of the processing circuit 11 being 3.3 V and a conventional operating voltage of each of the safety input devices 20 being 22 V, it is necessary to isolate and transform the output test signals and/or the input feedback signals. Thus, the safety input devices 20 may operate on the received test signals output by the processing circuit 11, that is, provide feedbacks. The processing circuit 11 may operate on the received feedback signals output by the safety input devices 20, that is, determine the specific logic control strategy.

In some embodiments, the output circuit 122 includes a first isolation transformer circuit. The first isolation transformer circuit is respectively connected to the processing circuit 11 and the corresponding connected safety input device 20, so as to achieve transformation and isolation of the test signals. Alternatively, the input circuit 121 includes a second isolation transformer circuit. The second isolation transformer circuit is respectively connected to the processing circuit 11 and the corresponding connected safety input device 20, so as to achieve transformation and isolation of the feedback signals. Alternatively, while the output circuit 122 is equipped with the first isolation transformer circuit and the input circuit 121 is equipped with the second isolation transformer circuit, it is possible to achieve dual transformation and isolation effects, thereby improving the safety control effect on the robot.

Based on the structure of the plurality of input interface circuits 12 described in the above embodiments, in some embodiments, the operation S13 may include an operation S131, an operation S132, and an operation S133.

At the operation S131, the operation S 13 may include transmitting the test signals to the connected safety input devices through the output circuits, and receiving the feedback signals of the connected safety input devices to the test signals from the input circuits.

In some embodiments, the plurality of input interface circuits 12 output the test signals generated by the processing circuit 11 to the output circuits 122, and further transmit the test signals to the corresponding safety input devices 20 connected to the plurality of input interface circuits 12 through the output circuits 122. The safety input devices 20 feed the test signals and transmits the feedback signals to the input circuits 121. The input circuits 121 further transmit the feedback signals to subsequent interface circuit, to further perform the operation S132 and the operation S133.

In some embodiments, the plurality of input interface circuits 12 further perform the operation S132 through the output circuits 122 equipped with the first isolation transformer circuits, and the plurality of input interface circuits 12 further perform the operation S133 through the input circuits 121 equipped with the second isolated transformer circuits.

At the operation S132, the operation S 13 may include isolating and transforming the test signals through the output circuits, and transmitting the isolated and transformed test signals to the connected safety input devices.

In some embodiments, the plurality of input interface circuits 12 isolate and transform the test signals input by the processing circuit 11 through the first isolation transformer circuit, and output the isolated and transformed test signals to the output circuits 122. Then, the test signals are transmitted to the connected safety input devices 20 through the output circuits 122. A voltage amplitude of each of the isolated and transformed test signals is an operating voltage value of the corresponding safety input device 20.

In some embodiments, the first isolation transformer circuit is disposed in the output circuit 122. In some embodiments, the first isolation transformer circuit may further be integrated into the processing circuit 11. In response to the processing circuit 11 determining the test signals corresponding to the first type information of the connected corresponding safety input device 20 through the operation S12, the operating voltage of the corresponding safety input device 20 is obtained, so as to adjust the first isolation transformer circuit integrated into the processing circuit 11. Thus, the test signals output by the processing circuit 11 meet the operating voltage of the corresponding safe input device 20.

At the operation S133, the operation S13 may include isolating and transforming the feedback signals through the input circuits, and receiving the isolated and transformed feedback signals of the corresponding connected safety input devices to the test signals from the input circuits.

In some embodiments, the plurality of input interface circuits 12 isolate and transform the feedback signals input by the safety input devices 20 through the second isolation transformer circuit, and transmit the isolated and transformed feedback signals to the input circuits 121. Then, the feedback signals are transmitted to the processing circuit 11 through the input circuits 121. A voltage amplitude of each of the isolated and transformed feedback signals is an operating voltage value of the processing circuit 11.

In some embodiments, the second isolation transformer circuit is disposed in the input circuit 121. In some embodiments, the second isolation transformer circuit may further be integrated into the processing circuit 11. In response to the feedback signals generated by the safety input devices 20 according to the test signals being transmitted to the processing circuit 11, the feedback signals are firstly input into the second isolation transformer circuit integrated into the processing circuit 11, and the signal states of the feedback signals are adjusted by adjusting the operating state of the second isolation transformer circuit. In response to the processing circuit 11 determining the test signals corresponding to the first type information of the corresponding connected safety input devices 20 through the operation S12, the operating voltage of the safety input devices 20 are obtained, so as to adjust the operating state of the second isolation transformer circuit. Thus, the feedback signal output by the second isolation transformer circuit meets the operating voltage of the processing circuit 11.

In some embodiments, in response to determining that the first type information of the safety input devices 20 connected to the plurality of input interface circuits 12 includes an electronic type, the interface of each of the plurality of input interface circuits 12 may be as shown in FIG. 5.

An optical and electronic safety input device 20 is usually an optical sensor, and the output is an electronic signal, such as a safety grating or a laser radar. An operating principle of the safety grating is as follows. The safety grating includes an emitter and a receiver. The emitter includes a plurality of infrared emitting tubes disposed at equal intervals on the same straight line. The receiver includes a plurality of infrared receiving tubes with the same quantity as that of the plurality of infrared emitting tubes and the same optical axis spacing as that of the plurality of infrared emitting tubes. The plurality of infrared receiving tubes correspond to the plurality of infrared emitting tubes one by one. Synchronization signals between the plurality of infrared receiving tubes of the receiver and the plurality of infrared emitting tubes of the emitter are controlled through an internal circuit. A protection area formed by the emitter and the receiver is a protection area of the safety grating. An operating principle of the laser radar is as follows. A laser signal is emitted by a laser radar emitting system. In response to the laser signal being transmitted to a target object to be measured, scattering is caused. After being reflected by the target object, the laser signal is collected by a receiving system. A distance of the target object is determined by measuring a running time of the reflected light.

In some embodiments, a typical safe output of the optical electronic safety input device 20 is a pair of OSSD signals (Output Signal Switch Device). A normal state of the OSSD is two-way high levels with periodic negative pulse signals, which is equivalent to outputting the high level. In response to object obstruction being detected by a light curtain or the laser radar, it controls a safe output action and the OSSD outputs a low level. In response to the device self-test failing, the OSSD output is also at the low level.

Since the optical and electronic safety input device 20 may generate excitation light by itself, i.e., the test signal, there is no need for the processing circuit 11 to output the test signal to the safety input device 20. The single-way test signal cannot determine the cause of the abnormality. A basic signal needs to be superimposed on the test signal. The cause of the abnormality may be determined by judging a change value in amplitude and frequency between the base signal and the test signal.

In some embodiments, as illustrated in FIG. 5 and FIG. 3, FIG. 5 is a structural schematic view of the plurality of input interface circuits of FIG. 3 in some embodiments of the present disclosure. As illustrated in FIG. 5, in some embodiments, each of the plurality of input interface circuits 12 include the input circuit 121. The input circuit 121 is respectively connected to the processing circuit 11 and the corresponding safety input device 20. The input circuit 121 is configured to obtain the test signal from the processing circuit 11 and superimpose the test signal with the pulse signal output by the corresponding connected safety input device 20. In some embodiments, each of the plurality of input interface circuits 12 is equipped with the interface board, which is the block shown in FIG. 5. The block is between the corresponding safety input device 20 and the input circuit 121. The interface terminal of the input circuit 121 is integrated into the interface board. In response to the safety input device 20 being connected to a corresponding one of the plurality of input interface circuits 12, the interface terminal of the safety input device 20 is connected to the interface terminal of the input circuit 121.

Furthermore, the safety input device 20 may generate a pulse signal by itself. In order to prevent the pulse signal from being mixed with signals of other wavebands in the process of inputting the pulse signal into the processing circuit 11, the pulse signal needs to be filtered to obtain a filtered pulse signal. In some embodiments, the input circuit 121 further includes a filtering circuit. The filtering circuit is disposed on an input side of the input circuit 121 and connected to the safety input device 20 for filtering the pulse signal.

On the other hand, since the pulse signal generated by the safety input device 20 is likely to be a constant voltage signal after filtering, it is difficult to distinguish a test pulse. Thus, in some embodiments, the input circuit 121 further includes a signal superposition circuit. The signal superposition circuit is respectively connected to the filtering circuit and the processing circuit 11. The signal superposition circuit is configured to superimpose the test signal with the filtered pulse signal, and feed the signal obtained by superposition processing back to the processing circuit 11.

Based on the structure of the plurality of input interface circuits 12 described in the above embodiments, in some embodiments, the operation S13 may further include an operation S231, an operation S232, and an operation S233.

At the operation S231, the operation S13 may further include filtering the pulse signal of the corresponding connected safety input device through the input circuit.

In some embodiments, each of the plurality of input interface circuits 12 filters the pulse signal input by the corresponding safety input device 20 through the filtering circuit of the input circuit 121, so as to remove the signals of other wavebands mixed with the pulse signal, to obtain the constant voltage signal.

At the operation S232, the operation S13 may further include transmitting the test signal to the input circuit and superimposing the test signal with the filtered pulse signal through the input circuit, to obtain a superimposed signal.

In some embodiments, the processing circuit 11 transmits the test signal to the input circuit 121, and superimposes the test signal with the filtered pulse signal through the signal superposition circuit of the input circuit 121, to obtain the test signal with the test pulse.

At the operation S233, the operation S13 may further include receiving the superimposed signal from the input circuit as the feedback signal of the connected safety input device to the test signal.

In some embodiments, the processing circuit 11 receives the feedback signal from the input circuit 121. That is, the processing circuit 11 receives the superimposed signal as the feedback signal of the connected safety input device 20 to the test signal.

At the operation S14, the safety control method for the robot may include determining whether the connected safety input device is abnormal based on the feedback signal.

In some embodiments, the processing circuit 11 further determines whether the connected safety input device 20 is abnormal by judging the feedback signal obtained through the operations S131-S133 or the operations S231-S233.

In some embodiments, the processing circuit 11 outputs two test signals, and a certain phase difference is between the two test signals. The safety input device 20 generates two feedback signals based on the two test signals. The processing circuit 11 fuses the two feedback signals to obtain a fused signal, and determines whether the connected safety input device 20 is abnormal based on the fused signal.

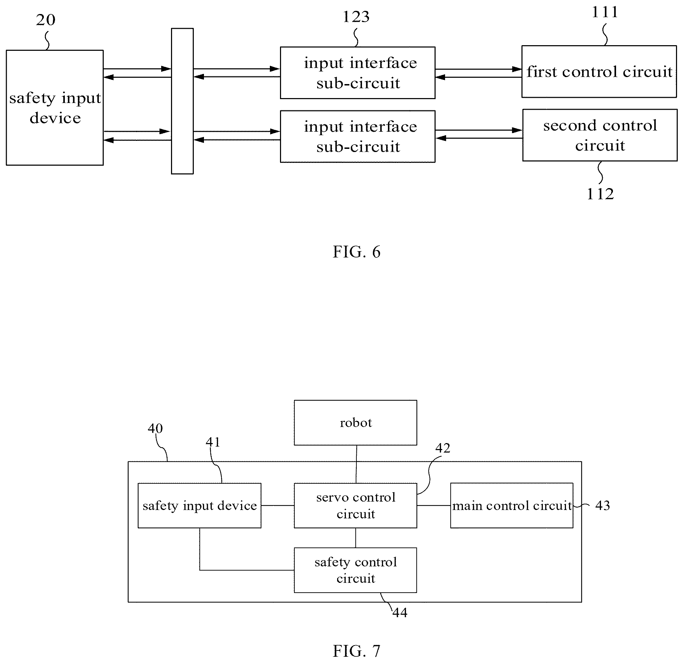

In some embodiments, as illustrated in FIG. 6 and FIG. 3, FIG. 6 is a structural schematic view of the safety control circuit for the robot in some embodiments of the present disclosure. As illustrated in FIG. 6, the connected safety input device 20 is equipped with two signal transmission channels, and each of the plurality of input interface circuits 12 includes two input interface sub-circuits 123. The two input interface sub-circuits 123 correspond to the two signal transmission channels one by one. That is, each of the two input interface sub-circuits 123 are respectively connected to a corresponding one of the signal transmission channels and the processing circuit 11.

In some embodiments, as illustrated in FIG. 6, the processing circuit 11 includes a first control circuit 111 and a second control circuit 112. The first control circuit 111 is connected to one of the two input interface sub-circuits 123. The first control circuit 111 is configured to generate a first detection result based on the feedback signal and the logical control strategy input by one of the input interface sub-circuits 123. The second control circuit 112 is connected to the other of the two input interface sub-circuits 123. The second control circuit 112 is configured to generate a second detection result based on the feedback signal and the logic control strategy input by the other input interface sub-circuit 123. In some embodiments, the first control circuit 111 is further configured for cross validation of the first detection result and the second detection result to determine whether the processing circuit 11 is abnormal.

In some embodiments, each of the plurality of input interface circuits 12 are equipped with the interface board, which is the block shown in FIG. 6. The block is disposed between the corresponding safety input device 20 and two input interface sub-circuits 123. The interface terminals of the input interface sub-circuits 123 are integrated into the interface board. In response to the safety input device 20 being connected to the corresponding one of the plurality of input interface circuits 12, the interface terminals of the safety input devices 20 are connected to the interface terminals of the input interface sub-circuits 123 in one-to-one correspondence.

Based on the above structure of the plurality of input interface circuits 12, in some embodiments, the operation S13 and the operation S14 may further include an operation S331 and an operation S341.

At the operation S331, the operation S13 and the operation S14 may further include respectively transmitting the test signals to the two input interface sub-circuits, and respectively receiving the feedback signals to the test signals input by the corresponding safety input device 20 through the corresponding signal transmission channel from the two input interface sub-circuits.

In some embodiments, the processing circuit 11 respectively transmits the test signals to the two input interface sub-circuits 123 through the first control circuit 111 and the second control circuit 112. The two input interface sub-circuits 123 respectively transmit the two test signals to the corresponding safety input device 20 through the two signal transmission channels, and respectively receive the feedback signals of the corresponding safety input device 20 to the test signals. The two input interface sub-circuits 123 further respectively transmit the two received feedback signals to the first control circuit 111 and the second control circuit 112. In some embodiments, it may effectively determine whether the state of the connected safety input device 20 is abnormal by disposing two redundant input interface sub-circuits 123.

At the operation S341, the operation S13 and the operation S14 may further include determining whether the connected safety input device is abnormal based on the feedback signals corresponding to the two signal transmission channels.

In some embodiments, the processing circuit 11 determines whether the connected safety input device 20 is abnormal based on the feedback signals from the two signal transmission channels.

In some embodiments, in response to the processing circuit 11 detecting that the two test signals correspond to and are the same as the two feedback signals, it is determined that the corresponding safety input device 20 is not abnormal. That is, the safety input device 20 is in a normal operating state and its state information is that two channels are closed. In response to the processing circuit 11 detecting that the two feedback signals are low-level signals, it is determined that the safety input device 20 is not abnormal. That is, the safety input device 20 is in the normal operating state and its state information is that the two channels are disconnected. In response to the processing circuit 11 detecting that one of the two feedback signals is always the low-level signal and the other of the two feedback signals is the same as the corresponding test signal, it is determined that the safety input device 20 is abnormal, and its state information is that the signal transmission channel corresponding to one of the two feedback signals is closed. In response to the processing circuit 11 detecting that one of the two feedback signals is always the low-level signal, it is determined that the safety input device 20 is abnormal, and its state information is that the signal transmission channel corresponding to the low-level signal is grounded. In response to the processing circuit 11 detecting that the two feedback signals are high-level signals, it is determined that there is a short circuit between the two signal transmission channels. In response to the processing circuit 11 detecting that one of the two feedback signals is always the high-level signal, it is determined that the safety input device 20 is abnormal, and its state information is that the signal transmission channel corresponding to the high-level signal is shorted to the high level.

In some embodiments, since the processing circuit 11 detects that one feedback signal is always the low-level signal, it may determine that the safety input device 20 is abnormal and immediately implement the logic control strategy, including at least one of shutdown or deceleration. Thus, it may be distinguished from the normal state where the two feedback signals are detected as the low-level signals. In addition, since the processing circuit 11 detects that one feedback signal is always the high-level signal, it may determine that the signal transmission channel corresponding to the high-level signal is shorted to the high level, and immediately implement the logic control strategy, including at least one of shutdown or deceleration. Thus, it may be distinguished from the abnormal state where the two feedback signals are detected as the high-level signals.

In some embodiments, the first control circuit 111 and the second control circuit 112 may further perform an operation S342 and an operation S343.

At the operation S342, the first control circuit 111 may further generate the first detection result based on the feedback signals and the logic control strategy corresponding to one signal transmission channel, and the second control circuit 112 may generate the second detection result based on the feedback signals and the logic control strategy corresponding to the other signal transmission channel.

In some embodiments, the first control circuit 111 generates the first detection result based on the feedback signals and the logic control strategy corresponding to one signal transmission channel. The second control circuit 112 generates the second detection result based on the feedback signals and the logic control strategy corresponding to the other signal transmission channel.

At the operation S343, the first control circuit 111 and the second control circuit 112 may further perform the cross validation of the first detection result and the second detection result to determine whether the processing circuit of the safety control circuit is abnormal.

In some embodiments, the first control circuit 111 and the second control circuit 112 perform the cross validation of the first detection result and the second detection result to determine whether the processing circuit 11 of the safety control circuit 10 is abnormal. In some embodiments, the first control circuit 111 and the second control circuit 112 perform redundant detection of the detection results, effectively improving the accuracy of detection, thereby enhancing the safety level for the robot, and fully meeting the functional safety standards of industrial robots. The functional safety standards of the industrial robots include, but are not limited to, the safety requirements proposed by the collaborative robot safety standard ISO 10218 and the safety architecture proposed by the mechanical safety standard ISO 13849-1. In some embodiments, the safety functions of the industrial robots need to meet Category 3 and Performance Level d.

At the operation S15, the safety control method for the robot may include controlling the robot to execute a safety strategy in response to the abnormality.

In some embodiments, in response to the abnormality being detected in the connected safety input device 20 or the processing circuit 11 of the safety control circuit 10 according to the operation S341 or the operation S343, the robot is controlled to execute the safety strategy, such as controlling shutdown, torque shutdown, or controlling deceleration, etc. A plurality of safety strategies are matched with the abnormal types of the safety input device 20 determined by the processing circuit 11 or the abnormalities of the processing circuit 11 itself.

The present disclosure further provides another safety control method for the robot, as illustrated in FIG. 2, FIG. 2 is a structural schematic view of the safety control method for the robot in some embodiments of the present disclosure. As illustrated in FIG. 2, in some embodiments, the safety control method for the robot may include an operation S16, an operation S17, and an operation S18.

At the operation S16, the safety control method for the robot may include determining the second type information of the peripheral connected to the plurality of output interface circuits.

In some embodiments, the processing circuit 11 determines the second type information of the peripheral 30 connected to the plurality of output interface circuits 13. That is, the operating category of the peripheral 30 is determined, to determine the corresponding output signals to be generated. In some embodiments, the database for the robot may store a variety of different peripherals 30, and the peripherals 30 have different categories and different signals. The processing circuit 11 may read the second type information corresponding to the selection signal in the database through obtaining the selection signal that is generated based on the interaction between the user and the interactive interface for the robot.

At the operation S17, the safety control method for the robot may include generating output signals based on the second type information.

In some embodiments, the output signals include the high-level signals, the low-level signals, or the OSSD signals. It may be configured to output the high-level signals, the low-level signals, or the OSSD signals based on the second type information of the peripheral 30. In some embodiments, the processing circuit 11 generates corresponding output signals according to the second type information determined in the operation S16. In some embodiments, the processing circuit 11 may select the corresponding type of the output test signals according to the second type information of the safety input device 20 determined in the operation S16 through the software configuration mode. In some embodiments, the processing circuit 11 may also select and control different switch tubes to conduct and output corresponding test signals according to the second type information of the safety input device 20 determined in the operation S16 through the hardware configuration mode.

At the operation S18, the safety control method for the robot may include transmitting the output signals to the peripheral through the plurality of output interface circuits.

In some embodiments, the processing circuit 11 transmits the output signals generated in the operation S17 to the plurality of output interface circuits 13, and further transmits the output signals to the peripheral 30 through the plurality of output interface circuits 13. Thus, the peripheral 30 performs corresponding an operation based on the corresponding output signal, such as a lighting up prompt, or a starting subsequent device operation, etc.

In the present disclosure, the plurality of input interface circuits 12 are configured, and the first type information of the safety input devices 20 connected to the plurality of input interface circuits 12 is determined, so that different test signals are generated based on the first type information. Thus, the safety input devices 20 connected to different input interface circuits 12 may generate corresponding feedback signals based on the different test signals, and determine whether the connected safety input devices 20 are abnormal based on the feedback signals. In response to abnormality, the robot is controlled to execute the safety strategy and achieve safety control for the robot. In addition, in the present disclosure, corresponding testing may be performed by outputting the test signals corresponding to the first type information of the safety input devices 20. That is, the quantity and types of the safety input devices 20 may be flexibly configured, thereby improving applicability.

In addition, the plurality of input interface circuits 12 of the present disclosure have the same circuit design. Different test signals are output through obtaining the first type information of the safety input devices, that is, the same circuit achieves different functions, and there is no need to configure additional dedicated safety relay as the intermediate transition, which may effectively reduce costs. Moreover, in the present disclosure, the plurality of input interface circuits 12 adopt separate resistors, capacitors, MOSFETs, and optocouplers, which has cost advantages over integrated IC modes.

In the present disclosure, the feedback signals corresponding to the safety input devices 20 are obtained through the plurality of input interface circuits 12, thereby achieving redundant settings. Whether the state of the connected safety input devices 20 are abnormal is determined through the plurality of input interface sub-circuits 123 of the plurality of input interface circuits 12. Redundant detection is achieved through the first control circuit 111 and the second control circuit 112 in the processing circuit 11. Multiple redundant settings may effectively improve the accuracy of detection, thereby enhancing the safety level for the robot and meeting the functional safety standards of the industrial robots. The functional safety standards of the industrial robots include, but are not limited to, the safety requirements proposed by the collaborative robot safety standard ISO 10218 and the safety architecture proposed by the mechanical safety standard ISO 13849-1.

The present disclosure further provides a safety control system for the robot, as illustrated in FIG. 7, FIG. 7 is a structural schematic view of a safety control system for the robot in some embodiments of the present disclosure. As illustrated in FIG. 7, the safety control system for the robot includes a safety input device 41, a servo control circuit 42, a main control circuit 43, and a safety control circuit 44. The safety input device 41 is the safety input device 20 described in the above embodiments, and the safety control circuit 44 is the safety control circuit 10 described in the above embodiments, which may not be repeated here.

In some embodiments, the safety input device 41 is configured to collect a danger triggering signal. The servo control circuit 42 is connected to the robot and configured to control the robot. The main control circuit 43 is connected to the servo control circuit 42 and configured to control the servo control circuit 42. The safety control circuit 44 is respectively connected to the safety input device 41 and the servo control circuit 42. The safety control circuit 44 is configured to generate an abnormal signal based on the danger triggering signal. The servo control circuit 42 executes the safety strategy based on the abnormal signal.

The above description are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. A safety control method for a robot, **characterized in that** a safety control circuit (10) has a plurality of input interface circuits (12), wherein the plurality of input interface circuits (12) are capable to be connected to a plurality of safety input devices (20), and the safety control method comprises:
determining first type information of each of the plurality of safety input devices (20) connected to a corresponding one of the plurality of input interface circuits (12);
generating a test signal based on the first type information;
transmitting the test signal to the corresponding one of the plurality of input interface circuits (12) and receiving, from the corresponding one of the plurality of input interface circuits (12), a feedback signal of the each safety input device (20) connected to the corresponding one of the plurality of input interface circuits (12) to the test signal;
determining whether the each safety input device (20) connected to the corresponding one of the plurality of input interface circuits (12) is abnormal based on the feedback signal; and
controlling the robot to execute a safety strategy in response to abnormality.

2. The safety control method according to claim 1, wherein the first type information at least comprises mechanical and/or pressure sensor types, and each of the plurality of input interface circuits (12) comprises an input circuit (121) and an output circuit (122); and
the transmitting the test signal to the corresponding one of the plurality of input interface circuits (12) and receiving, from the corresponding one of the plurality of input interface circuits (12), a feedback signal of the each safety input device (20) connected to the corresponding one of the plurality of input interface circuits (12) to the test signal, comprises:
transmitting the test signal to the each connected safety input device (20) through the output circuit (122), and receiving the feedback signal of the each connected safety input device (20) to the test signal from the input circuit (121).

3. The safety control method according to claim 2, wherein the transmitting the test signal to the corresponding one of the plurality of input interface circuits (12) and receiving, from the corresponding one of the plurality of input interface circuits (12), a feedback signal of the each safety input device (20) connected to the corresponding one of the plurality of input interface circuits (12) to the test signal, further comprises:
performing isolation transformation treatment on the test signal through the output circuit (122) to transmit an isolated and transformed test signal to the each connected safety input device (20); and/or
performing isolation transformation treatment on the feedback signal through the input circuit (121) to receive an isolated and transformed feedback signal of the each connected safety input device (20) to the test signal from the input circuit (121).

4. The safety control method according to claim 1, wherein the first type information comprises an electronic type, wherein the input interface circuits (12) comprises the input circuit (121), the transmitting the test signal to the corresponding one of the plurality of input interface circuits (12) and receiving, from the corresponding one of the plurality of input interface circuits (12), a feedback signal of the each safety input device (20) connected to the corresponding one of the plurality of input interface circuits (12) to the test signal, comprises:
filtering a pulse signal of the each connected safety input device (20) through the input circuit (121);
transmitting the test signal to the input circuit (121), and superimposing the test signal with the filtered pulse signal through the input circuit (121) to obtain a superimposed signal; and
receiving the superimposed signal from the input circuit (121) as the feedback signal of the each connected safety input device (20) to the test signal.

5. The safety control method according to claim 1, wherein the safety control circuit (10) further comprises a plurality of output interface circuits (13) configured to be connected to a peripheral device, and the safety control method further comprises:
determining second type information of the peripheral device connected to the plurality of output interface circuits (13);
generating output signals based on the second type information; and
transmitting the output signals to the peripheral device through the plurality of output interface circuits (13);
wherein the output signals comprise a high-level signal, a low-level signal, or an OSSD signal.

6. The safety control method according to claim 1, wherein the each safety input device (20) is equipped with two signal transmission channels, each of the plurality of input interface circuits (12) comprises two input interface sub-circuits (123), and the two input interface sub-circuits (123) and the two signal transmission channels are in one-to-one correspondence; and the transmitting the test signal to the corresponding one of the plurality of input interface circuits (12) and receiving, from the corresponding one of the plurality of input interface circuits (12), a feedback signal of the each safety input device (20) connected to the corresponding one of the plurality of input interface circuits to the test signal, comprises:
transmitting the test signal to the two input interface sub-circuits (123), and receiving from each of the two input interface sub-circuits (123) feedback signals from corresponding signal transmission channels to the test signal
the determining whether the each safety input device (20) connected to the corresponding one of the plurality of input interface circuits (12) is abnormal based on the feedback signals, comprises:
determining whether the each connected safety input device (20) is abnormal based on the feedback signal of each of the two signal transmission channels.

7. The safety control method according to claim 6, further comprises:
generating a first detection result based on the feedback signal of one of the signal transmission channels and the logic control strategy, and generating a second detection result based on the feedback signal of the other of the signal transmission channels and the logic control strategy; and
performing cross validation of the first detection result and the second detection result to determine whether a processing circuit (11) of the safety control circuit (10) is abnormal.

8. A safety control circuit (10) for a robot, **characterized in that** the safety control circuit (10) for the robot is configured to implement the safety control method of any one of claims 1 to 7, and the safety control circuit (10) comprises:
a plurality of input interface circuits (12), configured to be connected to the plurality of safety input devices (20) for the robot; and
a processing circuit (11), configured to be connected to the plurality of input interface circuits (12), wherein the processing circuit (11) is configured to determine type information of each of the plurality of safety input devices (20) connected to the corresponding one of the plurality of input interface circuits (12), and to generate the test signal and to determine the logic control strategy based on the first type information; wherein the processing circuit (11) is further configured to transmit the test signal to the corresponding one of the plurality of input interface circuits (12) and to receive the feedback signal of the each safety input device (20) to the test signal from the corresponding one of the plurality of input interface circuits (12); and wherein the processing circuit (11) is further configured to determine whether the each safety input device (20) is abnormal based on the feedback signal, and to control the robot to execute the safety strategy based on the logic control strategy in response to the abnormality.

9. The safety control circuit (10) according to claim 8, wherein each of the plurality of input interface circuits (12) comprises:
an input circuit (121), configured to be respectively connected to the processing circuit (11) and a corresponding one of the safety input devices (20);
an output circuit (122), configured to be respectively connected to the processing circuit (11) and the corresponding one of the safety input devices (20);
wherein the output circuit (122) is configured to transmit the test signal to the corresponding one of the connected safety input devices (20), and the input circuit (121) is configured to receive the feedback signal from the corresponding one of the connected safety input devices (20) to the test signal.

10. The safety control circuit (10) according to claim 9, wherein the output circuit (122) comprises a first isolation transformer circuit, the first isolation transformer circuit is configured to be respectively connected to the processing circuit (11) and the corresponding one of the safety input devices (20), and the first isolation transformer circuit is configured to achieve transformation and isolation of the test signal; and/or
the input circuit (121) comprises a second isolation transformer circuit, the second isolation transformer circuit is configured to be respectively connected to the processing circuit (11) and the corresponding one of the safety input devices (20), and the second isolation transformer circuit is configured to achieve transformation and isolation of the feedback signal.

11. The safety control circuit (10) according to claim 8, wherein each of the plurality of input interface circuits (12) comprises:
an input circuit (121), configured to be respectively connected to the processing circuit (11) and corresponding one of the safety input devices (20), wherein the input circuit (121) is configured to obtain the test signal from the processing circuit (11) and to superimpose the test signal with the pulse signal output by the corresponding one of the safety input devices (20).

12. The safety control circuit (10) according to claim 11, wherein the input circuit (121) comprises:
a filtering circuit, configured to be connected to the corresponding one of the safety input devices (20), wherein the filtering circuit is configured to filtering the pulse signal; and
a signal superposition circuit, configured to be respectively connected to the filtering circuit and the processing circuit (11), wherein the signal superposition circuit is configured to superimpose the test signal with the filtered pulse signal and to feed a superimposed signal back to the processing circuit (11).

13. The safety control circuit (10) according to claim 8, further comprises:
a plurality of output interface circuits (13), configured to be connected to the processing circuit (11), wherein the plurality of output interface circuits (13) are configured to be connected to a peripheral device;
the processing circuit (11) is further configured to determine the second type information of the peripheral device connected to the plurality of output interface circuits (13), and to generate output signals based on the second type information; and the plurality of output interface circuits (13) are configured to transmit the output signals to the peripheral device; and
wherein the output signals comprise a high-level signal, a low-level signal, or an OSSD signal.

14. The safety control circuit (10) according to claim 8, wherein the each safety input device (20) is equipped with the two signal transmission channels, each of the plurality of input interface circuits (12) comprises the two input interface sub-circuits, and the two input interface sub-circuits and the two signal transmission channels are in one-to-one correspondence.

15. The safety control circuit (10) according to claim 14, wherein the processing circuit (11) comprises:
a first control circuit (111), configured to be connected to one of the two input interface sub-circuits, wherein the first control circuit (111) is configured to generate a first detection result based on the feedback signal of one of the two input interface sub-circuits and the logic control strategy; and
a second control circuit (112), configured to be connected to the other of the two input interface sub-circuits, wherein the second control circuit (112) is configured to generate a second detection result based on the feedback signal of the other of the two input interface sub-circuits and the logic control strategy;
wherein the first control circuit (111) is further configured to perform cross validation of the first detection result and the second detection result to determine whether the processing circuit (11) is abnormal.

16. A safety control system for a robot, **characterized by** comprising:
a safe input device (41), configured to collect a danger triggering signal;
a servo control circuit (42), configured to be connected to the robot and configured to control the robot;
a main control circuit (43), configured to be connected to the servo control circuit (42) and configured to control the servo control circuit (42); and
a safety control circuit (44), configured to be respectively connected to the plurality of safety input devices (41) and the servo control circuit (42), wherein each of the plurality of safety control circuits (44) is configured to generate an abnormal signal based on the danger triggering signal, and the servo control circuit (42) is configured to execute a corresponding safety sub-strategy based on the abnormal signal; and wherein the safety strategy comprises a plurality of safety sub-strategies;
wherein the safety control circuit (44) is the safety control circuit (10) of any one of claims 8 to 15.
